# EUROPEAN PATENT APPLICATION

(11) **EP 4 530 329 A1**
(43) Date of publication of application: **02.04.2025**
(21) Application number: 23306611.7
(22) Date of filing: 27.09.2023
(51) Int. Cl.: C09J 7/38, G09F 3/10

(54) **LABEL COMPRISING POLYETHER-BASED WASH-OFF ADHESIVES**

(71) Applicant: Bostik SA, 92700 Colombes (FR)
(72) Inventor: LI, Anlong, WAUWATOSA, 53226 (US)
(74) Representative: Arkema Patent

(57) **Abstract**

A label construct comprising a polyether-based adhesive, preferably the label construct passes association of plastic recyclers critical guidance criteria for wash-off labels. Preferably the polyether-based adhesive comprises a pressure sensitive adhesive. Also included herein are articles containing the label construct, methods of removing the label construct form the container, and methods of recycling the container, as well as wash-off adhesive compositions.

## Description

### Field of the Invention

The field of the invention generally relates to adhesives capable of functioning in wash-off applications. More specifically the field of the invention relates to polyether-based adhesives in wash-off applications. Further, the polyether-based adhesive may be a pressure sensitive adhesive.

### Background

Pressure-sensitive adhesives (PSAs) are materials that are tacky at room temperature, allow instantaneous adhesion to a substrate with the aid of merely a light pressure, have sufficient cohesion to resist debonding. PSAs are widely used in applications of self-adhesive labels, and tapes, etc.

To support the move towards greater sustainability in the packaging sectors, recycling of the packaging materials is, and will continue to be essential. Regulations and policies are being in place to reduce municipal waste and to accelerate a circular economy for the packaging sectors. Under these circumstances, more brand owners are committing to recyclable packaging solutions/products. To facilitate recycling of the packaging materials, adhesive labels and laminating adhesives that are attached to the packaging substrate must be readily removed to avoid contamination. Therefore, it is advantageous to design labeling solutions that enable removal (e.g., via wash-off) of the labels from the substrates, and to increase recycling efficiency and quality. There is some guidance setting forth requirements that adhesive labels should meet or exceed. For example, for APR (Association of Plastic Recyclers) recognition on the recyclability of the adhesive labels with HDPE bottles, preferably, the adhesive labels meet or exceed the APR HDPE Critical Guidance criteria HDPE-CG-01 protocol. ForAPR recognition on the recyclability of the adhesive labels with PET containers, the adhesive labels must meet or exceed the APR PET Critical Guidance criteria PET-CG-02, Critical Guidance Protocol for Clear PET Articles with Labels and Closures. HDPE-CG-01 and PET-CG-02 are incorporated herein by reference in their entirety as if fully rewritten herein.

The wash-off adhesive labeling solutions can use PSAs, and prior-art technologies were based on acrylic-based PSAs or styrenic block copolymer-based PSAs. For example, US patent 3,763,117 disclosed a PSA based on functional acrylic copolymers that could be removed or dispersed by hot caustic solutions. US patent 7,109,263 disclosed a hot melt PSA comprising a styrenic block copolymer, a tackifier, an acid functional diluent with an acid number of at least 100, which could enable a label to be removed from container substrate in hot caustic solution. US patent 9,988,528 also disclosed a hot melt PSA comprising styrenic block copolymer, tackifier, and carboxylic acids, the hydrocarbon chain of which comprises 6 to 54 carbon atoms. This PSA was used to bond a self-adhesive label to an article such as a glass bottle, the composition could debond when immersed in a basic aqueous solution but remains essentially fastened to the label without contaminating the basic aqueous solution.

In some of the prior-art wash-off solutions, PSAs need to combine with shrinkable facestocks to enable an effective wash-off of the label from substrates. For example, US 6,680,097 disclosed adhesive labels used for labeling reusable bottles. The wash-off of the label was achieved by combination a PSA with a stretched film layer, which shrinks back at elevated temperature in the washing liquid. The shrinking force of the facestock and the action of hot caustic solution on the adhesive synergized in the process of removing the adhesive label from the substrates.

### Brief Description

These and other embodiments will become apparent in light of the following disclosure. The embodiments disclosed herein may vary in scope.

One embodiment disclosed herein is a label construct comprising a polyether-based adhesive. Preferably the label construct passes the association of plastic recyclers critical guidance criteria for wash-off labels.

Another embodiment disclosed herein is a label construct comprising a facestock and a polyether-based adhesive disposed on the facestock. The polyether-based adhesive comprises at least about 5 wt%, preferably at least about 10 wt%, more preferably at least about 20 wt% further preferably at least about 30 wt% of at least one polyether.

A further embodiment disclosed herein is an article comprising a substrate and a label construct comprising a facestock and a polyether-based adhesive disposed on the facestock. The polyether-based adhesive comprises at least about 5 wt%, preferably at least about 10 wt%, further preferably at least about 15 wt%, more preferably at least about 20 wt%, further preferably at least about 30 wt% of at least one polyether, the facestock adhered to a surface of the substrate. The substrate may comprise one of a rigid packaging material or a flexible plastic packaging material, further preferably the rigid packaging material or the flexible packaging material may comprise at least one selected from glass, metal, polyethylene terephthalate) (PET), high-density polyethylene (HDPE) and combinations thereof, or preferably the substrate comprises a packaging material.

An additional embodiment disclosed herein is a method of removing the label construct from a substrate. The label construct comprising a facestock and a polyether-based adhesive disposed on the facestock. The polyether-based adhesive comprises at least about 5 wt%, preferably at least about 10 wt%, more preferably at least about 20 wt% further preferably at least about 30 wt% of at least one polyether. The method includes exposing the substrate having the label construct adhered to the substrate to an aqueous liquid. Preferably the aqueous liquid has a temperature of at least 50°C, preferably more than about 65°C, more preferably at least about 70°C, even more preferably more than about 80°C. The method may optionally include agitating the aqueous liquid during the exposing. Preferably an agitation speed is set to achieve an impeller tip speed of at least about 60 meters per minute, more preferably at least about 180 meters per minute, further preferably at least about 240 meters per minute.

A further additional embodiment disclosed herein is an assembly comprising a container, a non-shrinkable label and a polyether-based adhesive disposed between the non-shrinkable label and an outer surface of the container. The polyether-based adhesive may comprise a pressure sensitive adhesive having at least about 15 wt%, preferably about 20 wt%, more preferably about 25 wt%, even more preferably about 30 wt% of a polyether, and optionally at least about 5 wt%, preferably at least about 10 wt%, more preferably at least about 15 wt% , even more preferably at least about 20 wt% of a tackifier. Preferably the non-shrinkable label shrinks less than about 5% in the main shrinkage direction, more preferably less than about 5% in both the main shrinkage direction, and a second direction, more preferably less than about 3% in both of the main shrinkage direction and the second direction, even more preferably less than about 2% in both the main shrinkage direction and the second direction or preferably less than about 5% in both of a x-y directions, even more preferably less than about 3% in both of the x-y directions, even more preferably less than about 2% in both the x-y directions.

Furthermore, another additional embodiment is an assembly including a container a non-shrinkable facestock, and a polyether-based adhesive disposed between the non-shrinkable facestock and an outer surface of the container. The polyether-based adhesive may comprise a pressure sensitive adhesive having at least about 5 wt%, preferably at least about 10 wt%, further preferably at least about 15 wt%, more preferably at least about 20 wt%, even more preferably at least about 30 wt% of a polyether, and optionally at least about 5 wt%, preferably at least about 10 wt%, more preferably at least about 15 wt% , even more preferably at least about 20 wt% of a tackifier. Preferably the non-shrinkable facestock maintains in its dimension in a 1^{st} direction upon exposure to an aqueous liquid, more preferably the facestock maintains its dimension in the 1^{st} direction and a 2^{nd} direction different from the 1^{st} direction upon the exposure, more preferably the non-shrinkable label shrinks less than about 3% in the 1^{st} direction upon exposure to the aqueous liquid, more preferably less than about 3% in both the 1^{st} direction and the 2^{nd} direction upon the exposure or preferably the non-shrinkable facestock shrinks less than about 5% in an one direction upon exposure to an aqueous liquid, or less than about 5% in both the one direction and a second direction that is perpendicular to the one direction upon the exposure, more preferably the non-shrinkable label shrinks less than about 3% in the one direction upon the exposure to the aqueous liquid, or less than about 3% in both the one direction and the second direction that is perpendicular to the one direction upon the exposure.

A further method disclosed herein is a method of removing a label form a substrate. The method includes the step of instructing to expose the substrate having a label to an aqueous solution at a temperature of more than about 50°C, preferably more than about 65°C, even more preferably at least about 70°C, and further preferably at least about 75°C. A polyether-based adhesive is disposed between the substrate and the label, wherein the adhesive comprises a composition of at least about 15 wt%, preferably at least about 20 wt%, more preferably at least about 25 wt% of a polyether and optionally at least about 15 wt% of a tackifier. Preferably the polyether-based adhesive is a pressure sensitive adhesive.

An additional method disclosed herein includes a method of recycling comprising a step of exposing an article which includes a substrate, to be recycled, and a label construct adhered to a surface of the substrate to an aqueous solution at a temperature of at least about 50 °C, preferably at least about 65 °C, more preferably at least about 70 °C, even more preferably at least about 75 °C. The label construct may include a facestock and a polyether-based adhesive disposed on the facestock. The polyether-based adhesive may comprise at least about 5 wt%, preferably at least about 10 wt%, further preferably at least about 15 wt%, more preferably at least about 20 wt% further preferably at least about 30 wt% of at least one polyether. It is also preferable the polyether-based adhesive is a pressure sensitive adhesive.

An advantage of the embodiments disclosed above is the label may be removed from the substrate with the use of little to no caustic. In a particular embodiment, the washing liquid may be caustic free.

Advantageously, it was discovered the label construct comprises a polyether-based PSA could readily detach from substrates in hot water, preferably with agitation. In other words, the labels can be washed off in the absence of a caustic substance which is typically necessarily used in the prior-art wash-off solutions. Substrate materials with high quality can be reclaimed with the labeling solution and wash-off methods of the present invention.

Other advantages may include, without limitation:
(1) Because no strong basic substance is used, the washing line and process can be safer and has a lower processing cost.
(2) Contamination of the reclaimed substrates due to printed inks can be eliminated or reduced with using a neutral aqueous liquid. In prior-art solutions, ink-bleeding occurs because commercially available inks can be soluble or dispersible in caustic washing liquid, and thus contaminating the washing liquid and the reclaimed substrates. However, most of the printed inks can be resistant to neutral aqueous liquid (without addition of any caustic substance). Therefore, the printed inks can remain intact and stay with label facestock and thus can be removed along with the facestock.
(3) The wash-off ability can be readily enabled without using a shrinkable facestock. In some of the prior-art solutions (e.g., US Patent 6,680,097), a shrinkable facestock is necessarily used for designing a label to be washed off. Shrinking force of the facestock synergizes with the action of the hot caustic solutions on the adhesive in the process of detaching the adhesive labels from the substrates. Shrinkable materials are made at an extra cost as compared to the non-shrinkable grades. In the present invention, shrinkable facestocks are not necessary to enable the wash off of the labels, which reduces the overall cost of the wash-off adhesive labels.

### Detailed Description

At least an exemplary embodiment of the invention will now be described.

Before explaining at least one embodiment of the present disclosure in detail, it is to be understood that the present disclosure is not limited in its application to the details of construction and the arrangement of the components or steps or methodologies set forth in the following description or illustrated in the drawings. The present disclosure is capable of other embodiments or of being practiced or carried out in various ways. Also, it is to be understood that the phraseology and terminology employed herein is for the purpose of description and should not be regarded as limiting.

Unless otherwise defined herein, technical terms used in connection with the present disclosure shall have the meanings that are commonly understood by those of ordinary skill in the art. Further, unless otherwise required by context, singular terms shall include pluralities and plural terms shall include the singular.

All patents, published patent applications, and non-patent publications mentioned in the specification are indicative of the level of skill of those skilled in the art to which the present disclosure pertains. All patents, published patent applications, and non-patent publications referenced in any portion of this application are herein expressly incorporated by reference in their entirety to the same extent as if each individual patent or publication was specifically and individually indicated to be incorporated by reference.

All of the articles and/or methods disclosed herein can be made and executed without undue experimentation in light of the present disclosure. While the articles and methods of the present disclosure have been described in terms of preferred embodiments, it will be apparent to those of ordinary skill in the art that variations can be applied to the articles and/or methods and in the steps or in the sequence of steps of the method(s) described herein without departing from the concept, spirit and scope of the present disclosure. All such similar substitutes and modifications apparent to those skilled in the art are deemed to be within the spirit, scope and concept of the present disclosure.

As utilized in accordance with the present disclosure, the following terms, unless otherwise indicated, shall be understood to have the following meanings.

The use of the word "a" or "an" when used in conjunction with the term "comprising" can mean "one," but it is also consistent with the meaning of "one or more," "at least one," and "one or more than one." The use of the term "or" is used to mean "and/or" unless explicitly indicated to refer to alternatives only if the alternatives are mutually exclusive, although the disclosure supports a definition that refers to only alternatives and "and/or." Throughout this application, the term "about" is used to indicate that a value includes the inherent variation of error for the quantifying device, the method(s) being employed to determine the value, or the variation that exists among the study subjects.

References herein to "one embodiment," or "one aspect" or "one version" or "one objective" or "another embodiment," or "another aspect" or "another version" or "another objective" of the invention can include one or more of such embodiment, aspect, version or objective, unless the context clearly dictates otherwise.

The term "at least one" refers to one as well as any quantity more than one, including but not limited to, 1, 2, 3, 4, 5, 10, 15, 20, 30, 40, 50, 100, etc. The term "at least one" can extend up to 100 or 1000 or more depending on the term to which it is attached.

All percentages, parts, proportions, and ratios as used herein are by weight of the total composition, unless otherwise specified. All such weights as they pertain to listed ingredients are based on the active level and therefore do not include solvents or by-products that can be included in commercially available materials, unless otherwise specified.

All references to singular characteristics or limitations of the present invention shall include the corresponding plural characteristics or limitations, and vice-versa, unless otherwise specified or clearly implied to the contrary by the context in which the reference is made.

Numerical ranges as used herein are intended to include every number and subset of numbers contained within that range, whether specifically disclosed or not. Further, these numerical ranges should be construed as providing support for a claim directed to any number or subset of numbers in that range.

As used herein, the words "comprising" (and any form of comprising, such as "comprise" and "comprises"), "having" (and any form of having, such as "have" and "has"), "including" (and any form of including, such as "includes" and "include") or "containing" (and any form of containing, such as "contains" and "contain") are inclusive or open-ended and do not exclude additional, unrecited elements or method steps. The terms "or combinations thereof" and "and/or combinations thereof" as used herein refer to all permutations and combinations of the listed items preceding the term. For example, "A, B, C, or combinations thereof" is intended to include at least one of: A, B, C, AB, AC, BC, or ABC and, if order is important in a particular context, also BA, CA, CB, CBA, BCA, ACB, BAC, or CAB. Continuing with this example, expressly included are combinations that contain repeats of one or more items or terms, such as BB, AAA, AAB, BBC, AAABCCCC, CBBAAA, CABABB, and so forth. The skilled artisan will understand that typically there is no limit on the number of items or terms in any combination, unless otherwise apparent from the context. As used herein the words "consisting of" are indicative of closed-end claims or embodiments in which additional unrecited elements or method steps are excluded.

For purposes of the following detailed description, other than in any operating examples, or where otherwise indicated, numbers that express, for example, quantities of ingredients used in the specification and claims are to be understood as being modified in all instances by the term "about". The numerical parameters set forth in the specification and attached claims are approximations that can vary depending upon the desired properties to be obtained in carrying out the invention.

The term "or combinations thereof", "and combinations thereof", and "combinations thereof" as used herein refers to all permutations and combinations of the listed items preceding the term. The term "about" refers to a range of values ± 10% of a specified value. For example, the phrase "about 200" includes ± 10% of 200, or from 180 to 220.

The term "polymerization" or "polymerizing" refers to methods for chemically reacting monomer compounds to form polymer chains. The polymer chain can be alternating, blocked, or random. The type of polymerization method can be selected from a wide variety of methods and include the following non-limiting examples: poly condensation, step growth polymerization, and free radical polymerization. The term "polymer" refers to any large molecule, which includes macromolecules. The term "polymer" refers to a large molecule comprising one or more types of monomer residues (repeating units) connected by covalent chemical bonds. Non-limiting examples of polymers include homopolymers, and non-homopolymers such as copolymers, terpolymers, tetrapolymers and the higher analogues.

The term "monomer" refers to a small molecule that chemically bonds during polymerization to one or more monomers of the same or different kind to form a polymer.

The term "copolymer" herein refers to a polymer prepared from more than one monomer.

Unless indicated otherwise, viscosities disclosed herein are at 25°C ±5°C.

This invention is related to a novel adhesive labeling solution. Specifically, it is related to novel adhesive labels that can be washed off at elevated temperatures. More specifically, it is related to a label construct of an adhesive/facestock combination can be washed off with optional agitation in aqueous liquid at elevated temperatures, wherein the adhesives are preferably polyether-based pressure-sensitive adhesives.

Herein, the term "facestock" means a single layer material or a multi-layer material that are designed and used for label construction. Adhesives can be applied on one surface of the facestock; and a layer of printed inks is disposed in contact with any surface of the facestock , or with any surface of any layer of the multi-layer facestock. In a particular embodiment the printed ink is disposed on a surface of the facestock other than the surface which the adhesive is applied. In a second particular embodiment the adhesive is applied over top of the printed ink.

The adhesive labeling solution can find applications in adhesive labels and/or laminating adhesives for packaging materials, which include but not limited to rigid packaging materials such as glass and metal containers, flexible plastic packaging materials including but not limited to injection molded products, extrusion blow molded bottles and thermoformed sheet stock, and soft/flexible packaging. Example of materials of construction for the packaging may include glass, metal, polyethylene terephthalate) (aka PET), high density polyethylene (aka HDPE) and combinations thereof.

### Polyether-based adhesives

The adhesives are compositions that contain polyethers. Polyethers can be any polymers obtained from polymerization of cyclic ethers such as ethylene oxide, propylene oxide, butyl oxide, tetrahydrofuran, 2-methyltetrahydrofuran, 3-methyltetrahydrofuran, 2,2-dimethyltetrahydrofuran, 2,3-dimethyltetrahydrofuran, 3,3-dimethyltetrahydrofuran, oxetane and its derivatives, epoxidized fatty acids, epoxidized fatty acid esters, epoxidized plant oils, glycidyl ethers, and the like, or from copolymerization of any combination of the above cyclic ethers. Examples of the polymers can include but are not limited to polyethylene glycol), polypropylene glycol), poly(tetramethylene glycol), copolymers of ethylene glycol and propylene glycol. Preferably, polypropylene glycol) (PPG) and copolymers containing at least one PPG block are used as the polyether in the adhesives of this invention.

The number-average molecular weight (Mn) of the polyethers is not particularly limited but is preferably about 1,000 g/mol or more, more preferably about 5,000 g/mol or more, and even more preferably about 10,000 g/mol or more. The Mn of the polyethers was measured with GPC (Gel Permeation Chromatography) and determined relatively to polystyrene that is used as the calibration standard.

One type of these polyethers can be used alone or any combined mixture of at least two types may be used as a component in the adhesive compositions. The polyethers can also be crosslinked and/or chain-extended with a curing agent, so as to obtain polymers or crosslinked polymer networks with sufficient cohesion strength for PSA applications. In other words, the polyethers can be incorporated as blocks into the polymers or polymer networks. One type of the polyethers can be used alone or a mixture of at least two types of polyethers, or a mixture of at least one polyether with other polymers can be used in the curing step. The curing chemistry and curing agents are not particularly limited; examples can include but are not limited to the following:
(1) Polyethers can be end-capped with alkoxysilane-type functional groups, which can be then moisture-cured to form a chain-extended and/or crosslinked polymers in the presence of water or moisture. Examples of the alkoxysilane capped polyether include but are not limited to, Geniosil STP-E10 (a product by Wacher), Geniosil STP-E30 (a product by Wacher), SILYL SAX350 (a product by Kaneka), and SILYL SAX580 (a product by Kaneka). Compositions of such polyether-based polymers and the methods of crosslinking the polymers are disclosed in US patents 8,691,909 and 8,535,798, and US patent application 2022/0049143, the entire contents of which are incorporated by reference herein. Representative polyether-based PSAs include but are not limited to STL^{®} 3004 and STL^{®} 3313, both of which are available from Bostik.
(2) Polyethers can be chain-extended and/or crosslinked with compounds containing at least two isocyanate (-NCO) groups, via the reaction between the hydroxyl groups of the polyether and the -NCO groups.
(3) Polyethers can be end-capped with allyl groups or (meth)acrylate groups, which are then chain-extended and/or crosslinked with compounds containing at least two mercaptan groups (-SH), via thiol-ene reaction.
(4) Polyethers can be modified with an acid anhydride obtained by reacting an acid anhydride with the hydroxyl groups of the polyethers. The acid anhydrides include but are not limited to succinic anhydride, maleic anhydride, and trimellitic anhydride. The modified polyethers have carboxylic acid groups at the chain ends, which allows for crosslinking and/or chain-extending via reaction with compounds containing at least two epoxy functional groups, or with compounds containing at least two oxazoline groups, or with compounds containing at least two carbodiimide groups.
(5) Polyethers may be capped with amine groups; examples include but are not limited to Jeffamine products available from Huntsman. Such polyethers can be chain-extended and/or crosslinked via reaction with compounds containing at least two isocyanate groups, or with compounds containing at least two epoxy groups, or with compounds containing at least two anhydride groups, or compounds containing at least two (meth)acrylate groups, or compounds containing at least two carboxylic acid groups.

In certain embodiments, the adhesive compositions are preferably comprising at least about 20 wt% of a polyether or a mixture of polyethers, more preferably at least about 30 wt% of a polyether or a mixture of polyethers.

Other components of the adhesives can include but are not limited to polymers or oligomers other than polyethers, compatible tackifying resins, curing agents, and fillers. "Polymers or oligomers other than polyethers" include but not limited to polyurethanes, styrenic block copolymers, natural rubber, polyacrylates, polyesters, and silicones. The tackifying resins used in the compositions are not particularly limited as long as they are compatible with other components of the compositions. The term "compatible" used herein means that admixing the tackifying resin with the other components of the compositions gives a homogeneous or practically homogeneous blend; in other words, no phase-separation occurs. Tackifying resins can include but are not limited to polyterpene resins, phenolic terpenes, rosin acids and rosin esters, resins obtained by polymerization or copolymerization of mixtures of unsaturated hydrocarbons having around 5, 9 or 10 carbon atoms derived from petroleum fractions.

Examples of polyether-compounds for use in polyether-based PSA compositions may include alkoxysilane capped polyether, as disclosed in US patent 8,691,909, the entire contents of which are incorporated by reference herein.

A PSA used for wash-off adhesive according to the invention can be a product from a heat-curable adhesive compositions.

In a particular embodiment, the heat-curable adhesive composition can comprise:
from 20 to 85% of one (or more) polyether (s) (A) comprising 2 hydrolysable alkoxysilane-type end groups, and of formula (I).

   (R¹O)_{*3*-*p*}(R²)*ₚ*Si-R³-NH-C(=O)-[OR⁴]*ₙ*-O-C(=O)-NH-R³-Si(R²)*ₚ*(OR¹)_{*3*-*p*}

   in which
   R¹ and R², are identical or different, each represent a linear or branched alkyl radical having 1 to 4 carbon atoms, with the possibility, when there are several R¹ (or R²) radicals, that these are identical or different;
   R³ represents a linear alkylene divalent radical comprising from 1 to 6 carbon atoms;
   R⁴ represents a linear or branched alkylene divalent radical comprising from 1 to 4 carbon atoms;
   *n* is an integer such that the number-average molecular weight of the polymer of formula (I) is between 20,000 Daltons and 40,000 Daltons;
   *p* is an integer equal to 0, 1 or 2;
   from 15 to 80% of one (or more) compatible tackifying resin(s) (B), having a number-average molecular weight between 200 Daltons to 10,000 Daltons; and
from 0.01 to 3% of a curing catalyst (C).

The amounts expressed in the form of a percentage correspond to weight/weight percentages.

The polymer (A) of the formula (I) included in the composition may be obtained by reacting a polyether diol of formula (II):

H-[OR⁴]ₙ-OH

with an isocyanatosilane of formula (III):

NCO-R³-Si(R²)*ₚ*(OR¹)_{*3*-*p*}

in a ratio of one mole of polyether diol of formula (II) per two moles of the compound formula (III).

The polymer (A) of formula (I) can be commercially available, which include but are not limited to (a) GENIOSIL^{®} STP-E30, available from Wacker, is a polyether of formula (I) in which p equals 1, R¹ and R² represent the methyl radical, R³ is the methylene radical, R⁴ is an alkylene radical having 3 carbon atoms. The polyether has a number-averaged molecular weight (M*ₙ*) of 38,000 Daltons and a polydispersity index of 1.9; (b) GENIOSIL^{®} STP-E35, available from Wacker, is a polyether of formula (I) in which p equals 0, R¹ is a methyl radical, R³ is the n-propylene radical, R⁴ is an alkylene radical having 3 carbon atoms. The polyether has an M*ₙ* of 32,240 Daltons and a polydispersity index of 1.3; (c) DESMOSEAL^{®} S XP 2636, available from Bayer, is a polyether of formula (I) in which p equals 0, R¹ is a methyl radical, R³ is the n-propylene radical, R⁴ is an alkylene radical having 3 carbon atoms. The polyether has an M*ₙ* of 33,408 Daltons and a polydispersity index of 1.9.

As regards the tackifying resin(s) (B) which are included in the composition, the expression "compatible tackifying resin" is understood to mean a tackifying resin which, when it is mixed in 50%/50% proportions with the polymer (A) of formula (I), gives a substantially homogeneous blend.

The resins (B) are advantageously chosen from:
(i) resins obtained by polymerization of terpene hydrocarbons and phenols, in the presence of Friedel-Crafts catalysts;
(ii) resins obtained by a process comprising the polymerization of alfa-methylstyrene, said process possibly also including a reaction with phenols;
(iii) natural or modified rosins, such as the rosin extracted from pine gum, wood rosin extracted from tree roots and their derivatives that are hydrogenated, dimerized, polymerized or esterified by monoalcohols or polyols such as glycerol;
(iv) resins obtained by hydrogenation, polymerization or copolymerization (with an aromatic hydrocarbon) of mixtures of unsaturated aliphatic hydrocarbons having around 5, 9 or 10 carbon atoms derived from petroleum fractions;
(v) terpene resins, generally resulting from the polymerization of terpene hydrocarbons such as, for example, monoterpene (or pinene) in the presence of Friedel-Crafts catalysts;
(vi) copolymers based on natural terpenes, for example styrene/terpene, alfa-methylstyrene/terpene and vinyltoluene/terpene; or else
(vii) acrylic resins having a viscosity at 100 °C of less than 100 Pa·s.

The resin (B) are preferably from those of type (i), (ii) or (iii).

Examples of resins of type (i) include but are not limited to: DERTOPHENE^{®} 1510 available from DRT, DERTOPHENE^{®} H150 available from DRT, SYLVAREZ^{®} TP 95 available from Kraton. Examples of resins of type (ii) include but are not limited to: NORSOLENE^{®} W100 available from Cray Valley, SYLVAREZ^{®} 510 available from Kraton.

Examples of resins of type (iii) include but are not limited to SYLVALITE^{®} RE100L available from Kraton.

The curing catalyst (C) that can be used in the composition may be any catalyst known to a person skilled in the art for silanol condensation. Mention may be made, as examples, of organic derivatives of titanium such as titanium acetyl acetonate (commercially available under the name TYZOR^{®} AA75 from DuPont), of aluminum such as aluminum chelate (commercially available under the name K-KAT^{®} 5218 available from King Industries), of amines such as 1,8-diazobicyclo[5.4.0] undec-7-ene or DBU.

Optionally, the composition may also include, in combination with the polyether (A) of formula (I), thermoplastic polymers often used the preparation of hot-melt PSAs, such as styrene block copolymers or ethylene vinyl acetate copolymers.

The heat-curable adhesives composition may also comprise up to 3% of a hydrolysable alkoxysilane derivatives, as a desiccant, and preferably a trimethoxysilane derivative. Such an agent advantageously prolongs the shelf life of the composition during storage and transport before the use thereof. Mention may be made, for example, of gamma-methacryloxypropyltrimethoxysilane available under the trade name SILQUEST^{®} A-174 available from US Momentive Performance Materials Inc.

The composition many also include a plasticizer such as a phthalate or a benzoate, a paraffinic and naphthenic oil, such as PRIMOL^{®} 352 from Esso, or else a wax of a polyethylene homopolymer, such as A-C^{®} 617 available from Honeywell, or else pigments, dyes, or fillers.

Finally, an amount of 0.1 to 2% of one or more stabilizers or antioxidants is preferably included in the composition. These compounds are introduced to protect the composition from degradation resulting from a reaction with oxygen which is capable of being formed by action of heat or light. These compounds may include primary antioxidants which trap free radicals and are, in particular, substituted phenols such as IRGANOX^{®} 1076 available from Ciba. The primary antioxidants may be used alone or in combination with other secondary antioxidants or UV stabilizers.

The heat-curable composition may be prepared by a process which comprises:
(a) a step of mixing in an air-free environment, preferably under an inert atmosphere, the polymer (A) of formula (I) with the tackifying resin (s) (B), at a temperature between 50 and 170°C, preferably between 100 and 170°C; then
(b) a step of cooling said mixture to a temperature ranging from 50 to 90°C, and advantageously of around 70°C; then
(c) a step of incorporating catalyst (C) and, where appropriate, desiccant and other optional components into said mixture.

In one embodiment, the above mixture can be coated and cured by a process comprising:
(a) preheating the mixture to a temperature between 50 to 130°C; then
(b) coating it onto a facestock ; then
(c) curing it, by heating the thus coated layer at a temperature between 50 to 150°C

The step (b) of the coating process is carried out using known coating devices, such as a lipped die or a curtain-coating type die, or else a roll coater. The material that can be used for the support layer includes but is not limited to paper, polymeric film, release paper and release films.

The time needed for the curing of step (c) may vary between 1 second and 10 minutes, depending on the coating weight (the weight per unit area of adhesive composition deposited on the support layer), on the heating temperature and on the relative humidity.

This heat-curing step has the effect of creating siloxane-type bonds between the polymer chains of the polyether of formula (I) under the action of atmospheric moisture, which result in the formation of a three-dimensional polymer network. The cured adhesive composition is a pressure sensitive adhesive that could function as wash-off adhesives according to the invention.

### Label facestock materials

This invention is related to adhesive label constructs that comprise of facestock and adhesive layer disposed on the facestock, wherein the adhesives are polyether-based pressure-sensitive adhesives. Herein, the term "facestock" means a single layer material or a multi-layer material that are designed and used for label construction. Adhesives can be applied on one surface of the facestock; and a layer of printed inks is disposed in contact with any surface of the facestock layer, or with any surface of any layer of the multi-layer facestock.

The facestock can be made of paper such as kraft paper, polymeric films or foams, or metals. The polymeric films or foams can be made of polyethylene, polypropylene and other polyolefins, polyesters such as polyethylene terephthalate) (PET), polyamides such as Nylon (e.g., Nylon 6,6), polystyrene, poly(vinyl chloride), poly(vinyl acetate), poly(ethylene-co-vinyl acetate), polyacrylates, polymethacrylates, polycarbonates, poly(lactic acid), cellulose-based polymers such as cellophane, acetal resins, and films or foams formed from composites of the above materials. Metal materials can be aluminum foil, copper foil, etc. Metal materials can be in form of metal oxide deposition layer such as alumina.

One type of the above materials can be used alone as a single layer facestock, or a combination of the above materials can be used as a facestock in the form of a laminate combining at least two layers. For example, a plastic film deposited with metal vapor can be deemed a plastic film/metal laminate.

The materials used for the label construct may include facestocks that can be shrinkable or non-shrinkable. The term "shrinkable" used herein means that the materials can reduce in size when it is activated, for example, by heat at elevated temperature, or activated by microwave and UV light, etc. The shrinkage ratio of a film can be determined per standard JIS Z 1709, Heat Shrinkable Plastic Films for Packaging (95th Edition, October 20, 2022). The material can shrink in one direction or both directions (i.e., longitudinal and transverse direction); the material is non-shrinkable if none of the directions shrink on activation. Examples of shrinkable films include but are not limited to stretched polyethylene film, stretched polypropylene film, and stretched polyester films. The shrinkable film can have a shrinkage rate of 10 to 90% in transverse direction and/or machine direction at an elevated temperature of, for example, about 95°C, and have a tensile strength of about 1,000 to about 100,000 psi (per ASTM D-882).

Embodiments of a nonshrinkable facestock upon the application of heat will shrink in the main direction of shrinkage less than a predetermined amount, preferably in both the main direction of shrinkage and a second direction. Typical examples on the maximum amount of shrinkage in the main direction of shrinkage, the second direction or both may be no more than about 5%, no more than about 3%, less than about 3%, no more than about 2%, less about 2% and no more than about 1%.

Alternatively, the direction of shrinkage may be described in terms of the x-y directions of the facestock. Another alternative may be a 1^{st} direction of shrinkage and a 2^{nd} direction of shrinkage perpendicular to the 1^{st} direction. Further the terms transverse direction and machine direction are equally applicable to nonshrinkable facestock.

The label construct may also include a printed layer. A printing layer contains printed inks for the purpose of displaying contents such as decorations, logos, graphics, etc. The printing layer is disposed in contact with any surface of the facestock layer, or with any surface of any layer of the multi-layer facestock laminate.

There is no particular limitation on the selection of the materials for the facestock or facestock laminates as long as the facestock or facestock laminate can sink or float in the wash liquid through the sink-float process (details on the sink-float process are described later). In other words, the facestock or facestock laminate may be designed to be effectively separable from the substrate materials to be recycled.

In some embodiments, the label construct was designed to facilitate recycling of high-density polyethylene (HDPE) containers. At post-consumer stage, the HDPE component of the container can be readily recycled per the Association of Plastic Recyclers (APR) *Critical Guidance Protocol for HDPE Rigid Containers.* Specifically, the labeled containers are exposed to washing liquid at elevated temperatures with agitation. The adhesive layer debonds, thus allowing the facestock/adhesive laminate to detach from the HDPE substrate. The facestock/adhesive laminate is designed to have a higher density than the washing liquid, and thus sinks in the liquid, while the HDPE substrate that has a lower density and thus floats on the top of the liquid. This design allows separation of the HDPE substrate free of any contaminations from the label construct. Examples of facestock materials used in these embodiments can include but are not limited to polyester-based films such as PET film.

In other embodiments, the label construct was designed to facilitate recycling of polyethylene terephthalate) (PET) containers. at post-consumer stage, the PET component of the container can be readily recycled per the APR *Critical Guidance Protocol for Clear PET Articles with Labels and Closures.* Specifically, the labeled containers are exposed to washing liquid at elevated temperatures with agitation. The adhesive layer debonds, thus allowing the facestock/adhesive laminate to detach from the PET substrate. The facestock/adhesive laminate is designed to have a lower density than the washing liquid, and thus floats on the top of the liquid, while the PET substrate that has a higher density and sinks in the liquid. This design allows separation of the PET substrate free of any contaminations from the label construct. Examples of facestock materials can include but are not limited to polyolefin-based films or foams such as biaxially oriented polypropylene (BOPP) films and polyethylene foams.

The above wash-off adhesive labeling solution is compatible with commercial recycling processes, thus allows readily drop in the recycling infrastructure (e.g., hot caustic wash lines).

The above adhesive labeling solution enhances recycling of packaging materials by increasing the recycling efficiency and quality, thus aligning with the growing introduction of recycling schemes by circular economy bodies, such as the Association of Plastic Recyclers (APR).

For embodiments in which the label construct is designed to float in the float process the label construct may have a density of less than water, preferably less than about 1 g/cc, more preferably less than about 0.8 g/cc, further preferably less than about 0.7 g/cc and even more preferably no more than about 0.5 g/cc.

For embodiments in which the label construct is designed to sink in the float process, the label construct may have a density of more than the density of water, preferably more than about 1 g/cc, more preferably at least about 1.2 g/cc, further preferably at least about 1.3 g/cc and even more preferably at least about 1.5 g/cc.

### Method of washing off the adhesive label construct

In some of embodiments of this invention, the label construct including a facestock and a polyether-based adhesive disposed on the facestock, is used as a label to be bonded to packaging substrates such as PET containers or HDPE containers. The whole assembly, substrate material/adhesive/facestock along with the accompanying printed inks layer are defined as "an article" hereafter. Example of the article can include but is not limited to a milk jug with adhesive labels applied on it. At post-consumer stage, adhesive label constructs including adhesive layer, facestock and printed inks layer, must be removed from the substrate of the article so that the substrate when recycled will not be contaminated and thus can be recycled as high quality.

One particular method of removing the adhesive labels include the following steps:
(1) Expose the article to hot water by immersing them in the hot water preferably with optional agitation. The temperature of the water during the immersion is preferably at least 50°C, more preferably at least about 60°C, and even more preferably at least about 75°C, preferably up to about 95°C. The agitation may be effected with rotating impeller of a stirring device. Agitation may provide a shear force on the article, and thus accelerating debonding of the adhesive from the substrate. Agitation speed is set to achieve an impeller tip speed of at least about 60 meters per minute, preferably at least about 180 meters per minute, more preferably at least about 240 meters per minute. The duration of the immersion in the agitated water is preferably within a range from about 1 minute to about 180 minutes, more preferably from about 5 minutes to about 60 minutes, and even more preferably from about 10 minutes to about 30 minutes.

Optionally, a caustic substance can be added to the hot water. Examples of the caustic substance can include but are not limited to sodium hydroxide, potassium hydroxide, barium hydroxide, calcium hydroxide, ammonia, and the like. The use of sodium hydroxide is preferred. The concentration of the basic substance is less than about 5.0 % by weight (vs the total washing liquid), preferably less than about 3.0 % by weight, even more preferably less than about 1.5%.

Optionally, a surfactant can be added to the washing liquid, which helps the washing liquid penetrate the bond lines, and thus facilitate the debonding and detaching of the adhesive labels. The surfactants can be cationic, anionic, non-ionic, and amphoteric- types. The concentration of the surfactant is preferably less than about 5.0% by weight (vs the total washing liquid), more preferably less than about 1.0 % by weight, and even more preferably less than about 0.5 % by weight.

Optionally, prior to the washing step, the articles (e.g., a labeled milk jug) may be granulated or shredded into smaller pieces or flakes to increase accessibility of the washing liquid into the bond lines. Examples of the granulation method can include but are not limited to cutting, crushing, and milling.

The treatment of the articles or flakes thereof in the above step results in the label constructs, inclusive of the adhesive, being detached from the substrate, preferably PET or HDPE substrates. "Detachment" means the adhesive label construct including the accompanying adhesive and printed inks are removed from the substrate to be recycled during this washing/treatment step.
(2) The mixture from the above step is then subjected to a sink-float process. In this step, the PET flakes sink in the washing liquid and thus can be readily separated from the adhesive label construct that is designed to float on the top of the washing liquid. Likewise, in the case of HDPE reclaiming, HDPE flakes float on the washing liquid and thus can be readily separated from the adhesive label construct that is designed to sink in the washing liquid.
(3) The PET or HDPE flakes are collected, rinsed with water, and dried to give high-purity PET or HDPE resins that are free of contaminations from adhesive labels.

The terms washing liquid, aqueous liquid, aqueous solution, recycling solution and any similar phrases have the same meaning herein.

The wash-off performance, i.e., the separation of the adhesive label construct from the substrate to be reclaimed, can be evaluated in terms of "percentage of separation", which is defined as the ratio of the quantity of substrate flakes that are separated and free of adhesives or label construct to the total quantity of test flakes. The percentage of separation is preferably at least about 70%, more preferably at least about 80%, and even more preferably at least about 90%.

Preferred is the following set of clauses 1 to 31:
1. A label construct comprising a facestock and a polyether-based adhesive disposed on the facestock, wherein the adhesive comprises at least about 5 wt%, preferably at least about 10%, more preferably at least about 20 wt% further preferably at least about 30 wt% of at least one polyether.
2. The label construct of clause 1 wherein the at least one polyether comprises a plurality of polyethers, preferably the plurality of polyethers comprises at least about 30 wt% of the polyether-based adhesive.
3. The label construct of clause 1 or clause 2 wherein the polyether comprises a polymer obtained from polymerization or copolymerization of one or more monomers selected from the group of ethylene oxide, propylene oxide, butyl oxide, tetrahydrofuran, 2-methyltetrahydrofuran, 3-methyltetrahydrofuran, 2,2-dimethyltetrahydrofuran, 2,3-dimethyltetrahydrofuran, 3,3-dimethyltetrahydrofuran, oxetane and its derivatives, epoxidized fatty acid, epoxidized fatty acid ester, epoxidized plant oil, glycidyl ether, and combinations thereof.
4. The label construct of any one of clauses 1 to 3 wherein the at least about 5 wt% of the at least one polyether comprises at least 2 crosslinked polyether molecules or wherein the plurality of polyethers comprises at least 2 crosslinked polyether molecules,
   preferably, the polyether-based adhesive exhibits a cohesion strength sufficient for pressure sensitive adhesives applications, further preferably at least about 30 hours, more preferably at least about 60 hours, and even more preferably at least about 150 hours per ASTM standard ASTM D3654, "Standard Test Methods for Shear Adhesion of Pressure-Sensitive Tapes", with the test substrate being a standard steel, the test specimen size being 1 inch by 1 inch, and the constant stress being 1000 grams.
5. The label construct of any of clauses 1 to 3 wherein the at least about 5 wt% of the at least one polyether or the plurality of polyethers comprises at least one polyether or the plurality of polyethers crosslinked with a curing agent, preferably the polyether-based adhesive exhibits a cohesion strength sufficient for a pressure sensitive adhesive application, or wherein the polyether-based adhesive comprises a plurality of polyether blocks.
6. The label construct of any one clauses 1 to 5 wherein the facestock comprises at least one layer of a film or a foam wherein the layer comprises a material selected from the group of paper, metal, polymers or combinations thereof, preferably the polymer comprises at least one selected from the group of polyethylene, polypropylene, other polyolefins, polyester, polyamide, polystyrene, poly(vinyl chloride), poly(vinyl acetate), poly(ethylene-co-vinyl acetate), polyacrylate, polymethacrylate, polycarbonate, poly(lactic acid), cellulose-based polymer, acetal resin and combinations thereof, more preferably the polyester comprises polyethylene terephthalate) (PET), more preferably the cellulose-based polymer comprises cellophane, more preferably the polyamide comprises a condensation product of adipic acid and hexamethylenediamine.
7. The label construct of clause 6 wherein the facestock comprises a second layer comprising the film or the foam, the layer and the second layer may be the same or different.
8. The label construct of either one of clauses 6 or 7 wherein the facestock comprises a laminate.
9. The label construct of any one of clauses 1 to 8 wherein a printing layer disposed in contact with a surface of the facestock.
10. An article comprising a substrate and the label construct of any one of clauses 1 to 9 adhered to a surface of the substrate, preferably, the substrate comprises one of a rigid packaging material or a flexible plastic packaging material, further preferably the rigid packaging material or the flexible packaging material comprises at least one selected from glass, metal, polyethylene terephthalate) (PET), high-density polyethylene (HDPE) and combinations thereof, or preferably the substrate comprises a packaging material.
11. A method of removing the label construct in accordance with any one of clauses 1-9 from a substrate comprising exposing the substrate having the label construct adhered to the substrate to an aqueous liquid, the aqueous liquid having a temperature of at least 50°C, preferably more than about 65°C, more preferably at least about 70°C, even more preferably more than about 80°C, optionally agitating the aqueous liquid during the exposing , preferably an agitation speed set to achieve an impeller tip speed of at least about 60 meters per minute, more preferably at least about 180 meters per minute, further preferably at least about 240 meters per minute.
12. The method of clause 11 wherein the aqueous liquid contains a caustic substance, preferably sodium hydroxide, a concentration of the caustic substance preferably comprises less than about 5.0 % by weight, more preferably less than about 3.0 % by weight, even more preferably less than about 1.5%,most preferably equal to or less than about 1 wt%.
13. The method of either one of clauses 11 or 12 wherein the aqueous liquid contains a surfactant, preferably the surfactant comprises at least one from a cationic surfactant, anionic surfactant, non-ionic surfactant, amphoteric surfactant, and combinations thereof, preferably a concentration of the surfactant comprises less than about 5.0% by weight, more preferably less than about 1.0 % by weight, and even more preferably less than about 0.5 % by weight.
14. The method of any one of clauses 11 to 13 wherein a time of the exposing the substrate to the agitated aqueous liquid comprises a range from about 1 minute to about 180 minutes, more preferably the range from about 5 minutes to about 60 minutes, and even more preferably the range from about 10 minutes to about 30 minutes, or wherein in the time of the exposing in the agitated aqueous liquid comprises at least one of: at least about 1 minute, at least about 5 minutes, at least about 10 minutes, up to about 180 minutes, up to about 60 minutes and up to about 30 minutes and combinations thereof.
15. An assembly comprising a container, a non-shrinkable label and a polyether-based adhesive disposed between the non-shrinkable label and an outer surface of the container, the polyether-based adhesive comprising at least about 15 wt%, preferably about 20 wt%, more preferably about 25 wt%, even more preferably about 30 wt% of a polyether-, and optionally at least about 5 wt%, preferably at least about 10 wt%, more preferably at least about 15 wt% , even more preferably at least about 20 wt% of a tackifier and preferably the non-shrinkable label shrinks less than about 5% in the main shrinkage direction, more preferably less than about 5% in both the main shrinkage direction, and a second direction, more preferably less than about 3% in both of the main shrinkage direction and the second direction, even more preferably less than about 2% in both the main shrinkage direction and the second direction or preferably less than about 5% in both of a x-y directions, even more preferably less than about 3% in both of the x-y directions, even more preferably less than about 2% in both the x-y directions, preferably the polyether-based adhesive comprises a pressure sensitive adhesive.
16. An assembly comprising a container and a non-shrinkable facestock, and a polyether-based adhesive disposed between the non-shrinkable facestock and an outer surface of the container, the polyether-based adhesive comprising at least about 5 wt%, preferably at least about 10 wt%, more preferably at least about 20 wt%, even more preferably at least about 30 wt% of a polyether-, and optionally at least about 5 wt%, preferably at least about 10 wt%, more preferably at least about 15 wt% , even more preferably at least about 20 wt% of a tackifier, and preferably the non-shrinkable facestock maintains in its dimension in a 1st direction upon exposure to an aqueous liquid, more preferably the facestock maintains its dimension in the 1^{st} direction and a 2^{nd} direction different from the 1st direction, more preferably the non-shrinkable label shrinks less than about 3% in the 1^{st} direction even more preferably less than about 3% in both the 1^{st} direction and the 2^{nd} direction or preferably the non-shrinkable facestock shrinks less than about 5% in one direction, or less than about 5% in both the one direction and a second direction perpendicular to the one direction, more preferably the non-shrinkable label shrinks less than about 3% in one direction, or less than about 3% in both the one direction and the second direction perpendicular to the one direction, preferably the polyether-based adhesive comprises a pressure sensitive adhesive.
17. The assembly of one of clauses 15 or 16 wherein a combination of the polyether-based adhesive exhibits a 180° peel strength within a range from about 0.5 N/inch to about 25 N/inch, preferably within a range from about 2 N/inch to about 15 N/inch, more preferably within a range from about 3 N/inch to about 10 N/inch.
18. The assembly of any one of clauses 15 to 17 or the label construct of any one of clauses 1-9 wherein the polyether-based adhesive comprises an insufficient amount of at least one of polyacrylates, hot-melt rubbers and combinations thereof to assist with adhesion preferably less than about 5 wt%, more preferably less than about 1 wt%, even more preferably no more than about 0.1 wt%.
19. The assembly of any one of clauses 15 to 18 or the label construct of any one of clauses 1-9 wherein the polyether-based adhesive comprises at least one of polyacrylates, styrenic block copolymers, ethylene vinyl acetate copolymers, and combinations thereof, at an amount of less than about 90 wt%, preferably less than about 60 wt%, more preferably less than about 30 wt%.
20. A method, preferably for removing a label construct form a substrate, comprising instructing to expose a substrate having a label construct to an aqueous solution at a temperature of more than about 50°C, preferably more than about 65°C, even more preferably at least about 70°C, and further preferably at least about 75°C wherein the label construct comprises an adhesive adjacent the substrate, wherein the adhesive comprises a composition of at least about 15 wt%, preferably at least about 20 wt%, more preferably at least about 25 wt% of a polyether and optionally at least about 15 wt% of a tackifier, preferably the adhesive comprises a polyether-based pressure sensitive adhesive.
21. The method of clause 20 further comprising instructing to agitate the aqueous solution.
22. The method of either one of clauses 21 or 22 further comprising instructing the aqueous solution to have no more than about 5.0 wt% of a caustic substance, preferably the caustic substance comprises sodium hydroxide, and preferably comprises less than about 5.0 % by weight, more preferably less than about 3.0 wt%, even more preferably less than about 1.5 wt%, of the caustic substance.
23. A method of recycling comprising a step of exposing an article consisting of a substrate to be recycled and the label construct of any one of clauses 1 to 9 adhered to a surface of the substrate in an aqueous solution at a temperature of at least about 50 °C, preferably at least about 65 °C, more preferably at least about 70 °C, even more preferably at least about 75 °C.
24. A method of recycling comprising a step of exposing an article including a substrate to be recycled and a label construct, wherein the label construct comprises a facestock and an adhesive, the adhesive comprising a composition of at least 5% wt%, preferably at least about 10 wt%, further preferably at least about 15 wt%, more preferably at least about 20 wt%, even more preferably at least about 30 wt% of a polyether, and optionally at least about 5 wt%, preferably at least about 10 wt%, more preferably at least about 15 wt%, even more preferably at least about 20 wt% of a tackifier, preferably the adhesive comprises a polyether-based pressure sensitive adhesive.
25. A label construct of any of clauses 1-9 wherein the label passes association of plastic recyclers critical guidance criteria for wash-off labels.
26. The label construct of clause 25 wherein the critical guidance criteria comprises HDPE CG-01 Critical Guidance Criteria for HDPE containers or PET-CG-02 Critical Guidance Criteria for PET containers.
27. A label construct comprising a polyether-based adhesive wherein the label construct passes association of plastic recyclers critical guidance criteria for wash-off labels, preferably the polyether-based adhesive comprises a pressure sensitive adhesive.
28. The label construct of any one of clauses 1-9 wherein the label construct (1) provide at least 80%, preferably 100%, wash-off from a substrate; or (2) undergoes adhesive failure under at least 1 wash-off condition described herein.
29. The label construct of any one of clauses 1-9 or 28 wherein label construct having a 180° peel strength within a range from about 0.5 N/inch to about 25 N/inch, preferably within a range from about 2 N/inch to about 15 N/inch, more preferably within a range from about 3 N/inch to about 10 N/inch.
30.
31. A method for recycling a first substrate, wherein an article includes the first substrate and the label construct of any one of clauses 1 to 9, the label construct adhered to the first substrate wherein the method for recycling comprises:
   exposing the article having the first substrate and the label construct with an aqueous solution having a sufficient temperature to detach the label construct from the first substrate; and
   retrieving the first substrate free of an adhesive which adhered the label construct to the first substrate, preferably the first substrate retrieved from the aqueous solution.

The merits of the labeling solutions of the present invention will become apparent with reference to the following Examples and Comparative Examples.

The adhesive compositions and their applications according to the present disclosure may be prepared and used according to the examples set out below. These examples are presented herein for purposes of illustration of the present disclosure and are not intended to be limiting, the scope of the invention.

### Examples

**Table 1.**

| | Temp., °C | NaOH, wt% | Time, min | Detachment, % | Separation, % |
|---|---|---|---|---|---|
| CE 1 | **82** | **0.5** | **10** | **10** | **0** |
| Example 1 | **82** | **0.5** | **10** | **100** | **100** |
| Example 2 | **82** | **0** | **10** | **100** | **100** |
| Example 3 | **85** | **0** | **5** | **100** | **100** |
| Example 4 | **75** | **0** | **10** | **76** | **52** |
| Example 5 | **65** | **0** | **10** | **0** | **0** |
| Example 6 | **75** | **0.5** | **10** | **100** | **100** |
| Example 7 | **85** | **1** | **15** | **100** | **100** |

| | | | | | |
|---|---|---|---|---|---|
| *NaOH represents a caustic compound | | | | | |

### Comparative Example (CE) 1

In this example, a caustic dispersible hot-melt PSA combined with non-shrinkable PET ("facestock") was used to make a label construct, which was then tested in terms of the wash-off performance from high-density polyethylene (HDPE) substrate.

TLH9200E (available from Bostik) was used as the PSA for the label construct. TLH9200E was a typical styrenic block copolymer-based PSA is a wash-off adhesive; details about this adhesive can be found in US patent 9,988,528.

The adhesive was coated on polyethylene terephthalate) (PET) (2 mil thick, by Transcendia (Franklin Park, IL, USA)) to give PET/adhesive laminate; the adhesive coating layer was approximately 1 mil thick.

The above PET/adhesive laminate had a peel strength of 3 Ib/inch (from HDPE substrate), and a loop tack of 3 Ib/inch (from HDPE substrate). The peel strength and loop tack were measured by 180° peel test and loop tack test respectively, as described below.

The above PET/adhesive laminate can sink in a typical washing liquid. The wash-off performance of the above label construct from HDPE substrate was tested per the wash-off test (described below), and the test result was summarized in the above Table 1.

### Example 1

In this example, a polyether-based PSA was coated on a non-shrinkable PET facestock to make a label construct, which was then tested in terms of the wash-off performance from the HDPE substrate.

The polyether-based PSA, STL^{®} 3004 (available from Bostik), was used herein. Details regarding this adhesive could be found in US patent 8,691,909, the details are incorporated herein in their entirety as if fully rewritten herein.

The adhesive was coated on PET (2 mil thick, by Transcendia) to give a PET/adhesive laminate; the adhesive coating layer was approximately 1 mil thick.

The above PET/adhesive laminate had a peel strength of 2.3 Ib/inch (peeled from HDPE substrate), and a loop tack of 2.6 Ib/inch (from HDPE substrate). The peel strength and loop tack were measured by 180° peel test and loop tack test respectively, as described below.

The above PET/adhesive laminate can sink in a typical washing liquid. The wash-off performance of the above label construct from the HDPE substrate was tested per the wash-off test (described below). HDPE flakes free of any adhesives or labels floated and could be readily separated. A pile of PET/adhesive flakes was found at the bottom of the washing liquid, which did not stick to the glass beaker and could be readily removed from the beaker. The test results were summarized in Table 1.

### Examples 2-6

The label constructs were the same as that used in Example 1, except that the conditions for the wash-off test were different. The conditions for the test and the test result were summarized in Table 1.

As shown in the test results, the label construct made from a polyether-based PSA and a non-shrinkable facestock could be effectively washed off from HDPE substrate in a caustic solution, while that made from styrenic block copolymer-based PSA could not (Example 1 vs CE1).

At elevated temperature of greater than 80°C, the label construct based on polyether-PSA was completely washed off and separated from HDPE substrates even in neutral aqueous liquid (i.e., without any NaOH added) (see Examples 2 and 3). The wash-off temperature can be lowered to 75°C when a small amount (0.5 wt% vs total washing liquid) of NaOH is added to the washing liquid (Example 6). The label construct was completely washed-off.

### Example 7

In this example, a typical polyether-based PSA was coated on a foam to make a label construct, which was then tested in terms of the wash-off performance from PET substrate.

The polyether-based PSA, STL^{®} 3313 (available from Bostik), was used herein. Details regarding this adhesive could be found in US patent 8,691,909.

The adhesive was coated on the foam (about 5 mil thick) to give foam/adhesive laminate; the adhesive coating layer was approximately 2 mil thick.

The above foam/adhesive laminate had a peel strength of 4.8 Ib/inch (peeled from PET substrate), and a loop tack of 6.3 Ib/inch (from PET substrate). The peel strength and loop tack were measured by 180° peel test and loop tack test respectively, as described below.

The above foam/adhesive laminate can float on a typical washing liquid. The wash-off performance of the above label construct from PET substrate was tested per the wash-off test (described below). PET flakes free of any adhesives or labels sank in the washing liquid, while the foam along with the adhesive was found on the top of the washing liquid, which could be readily separated and removed from the beaker. The test result was summarized in Table 1.

As shown in the test results, the polyether-based PSA could enable label constructs therefrom to be effectively washed off and separated from PET substrate in caustic solution, the label construct was completely successfully washed-off.

### Description of Test Methods

### 180° Peel test and loop tack test

The 180° peel strength and loop tack of the PSA laminate samples were determined with the PSTC-101 and PSTC-16 standard test methods, respectively.

Briefly, the PSA samples were cut into a strip 1 inch wide and 7 inches long. The strip and the clean test panel were conditioned in a controlled environment at 23 ± 1°C and 50 ± 5% RH. The sample strip was then applied onto the test panel with the aid of a rubber roller. The test sample having a tail not attached to the test panel. The applied sample was allowed to dwell on the test panel for 20 minutes. Afterwards, the panel was placed in the bottom jaw of an Instron tester machine, and the tail of the strip was clamped onto the top jaw of the machine. The sample strip was peeled at 180° angel at a speed of 12 inches/minute. The force required to pull the PSA strip from the test panel was recorded as the peel strength. Three specimens were tested, and the averaged value was recorded.

Loop tack measurement was performed on a clean test panel that was pre-fixed horizontally at the bottom jaw of an Instron tester. The PSA sample was cut into a strip 1 inch wide and 8 inches long. A loop was created from the strip with both ends met and the adhesive side facing outward the loop. The loop was then secured into the top jaw of the tester machine. The top jaw was allowed to move downward until the loop touched the test panel. Immediately after the touch, the moving direction of top jaw was reversed and moved upward. The maximum force required to pull the PSA loop from the test panel was recorded as the loop tack. Three specimens were tested, and the averaged values was recorded.

### Wash-off test

The test method for HDPE articles was adapted from APR protocol, *"Polyolefin Standard Laboratory Processing Practices"* (Document Number O-P-00, Publication or Revision Date, 7/24/2020), as specified in the APR guidance, *"Critical Guidance Protocol for HDPE Rigid Containers"* (Document number, HDPE-CG-01; Revision date, 3/21/2022).

Briefly, an adhesive label construct was applied onto HDPE substrate. The resulting laminate was conditioned at ambient temperature for 1 day. The laminate was used as "test article" in the following test. Flakes with size of about 1 cm by 1 cm were cut from the above test article and were used in subsequent washing step.

Fifty flakes were added to a 1-liter glass beaker pre-loaded with 200 grams of water, 1.0 gram (unless otherwise specified) of NaOH, and 0.6 g Tergitol 15-S-9 (a surfactant product by Dow chemical), while maintaining the solution temperature at 75°C (unless otherwise specified) and agitator speed at 500 rpm. After 10 minutes, remove the beaker from the heat source, and allow it to sit for 5 minutes. Collect any materials floating on the surface of the wash liquid, which was then rinsed with water and dried.

### Percentage of detachment

= the ratio of the quantity of label flakes detached from the HDPE flakes to the total quantity of test flakes

### Percentage of separation

= the ratio of the quantity of HDPE flakes floating and could be readily separated and free of adhesives or labels to the total quantity of test flakes.

The test method for PET articles was adapted from APR protocol, *"PET Standard Laboratory Processing Practices"* (Document Number PET-P-00, Publication or Revision Date, 11/1/2022), as specified in the APR guidance, *"Critical Guidance Protocol for Clear PET Articles with Labels and Closures"* (Document number, PET-CG-02; Revision date, 8/17/2021). The APR protocol are incorporated herein by reference in their entirety as if fully rewritten herein. The APR protocol also provide additional examples how a label can be washed off from HDPE or PET substrates.

Briefly, an adhesive label construct was applied onto PET substrate. The resulting laminate was conditioned at ambient temperature for 1 day. The laminate was used as "test article" in the following test. Flakes with size of about 1 cm by 1 cm were cut from the above test article and were used in subsequent washing step.

Fifty flakes were added to a 1-liter glass beaker pre-loaded with 200 grams of water, 2.0 gram (unless otherwise specified) of NaOH, and 0.6 g Tergitol 15-S-9 (a surfactant product by Dow chemical), while maintaining the solution temperature at 85°C (unless otherwise specified) and agitator speed at 500 rpm. After 15 minutes, remove the beaker from the heat source, and allow it to sit for five minutes.

Remove any materials floating on the surface of the wash solution. Pour the remaining mixture over a de-water screen to collect any sank solid, which were then rinsed with water and dried.

### Percentage of detachment

= the ratio of the quantity of label flakes detached from the PET flakes to the total quantity of test flakes.

### Percentage of separation

= the ratio of the quantity of PET flakes sank and could be readily separated and free of adhesives or labels
to the total quantity of test flakes.

Examples of other tests may include the following:
Average 90° peel strength

In order to determine the average 90° peel strength of an adhesive, the adhesive is coated to the first-listed substrate listed herein at a thickness of 1 mil by hand drawdowns on a heated table. As used herein, the first-listed substrate in the laminates mentioned herein may be referred to as `Substrate 1' with the second-listed substrate being referred to as `Substrate 2.' For example, Mylar^{®} polyester is Substrate 1 and glass is Substrate 2 in the 'Mylar-to-glass' laminate. A silicone-based release liner was placed on top of Substrate 1 and the coating was given 24 h to cool and reach equilibrium. After 24 h, the laminate was cut into 6 in x 1 in strips, the release liner was removed, the strip was applied to Substrate 2 and rolled 4 times with a 4 kg roller (Chem Instruments HR-100) to simulate pressure-sensitive application. After 24 hours of the adhesive bonded between Substrate 1 and Substrate 2, the laminates are pulled apart by the Chem Instrument Probe Material Analyzer at a rate of 12 inches per minute for 5 inches of distance. The peel force was measured in grams-force, and the peel value was calculated by determining the average peel strength after eliminating the first and last five percent of the sample length to reduce variability from starting and stopping the test. An example of Substrate one was a commercially available 0.002 mil TransPET polyethylene terephthalate) Oriented CAD2 Chem Treat 2 Sides (Transcendia) and example of Substrate 2 was a glass plate (Chem Instruments, meeting required ASTM D3330).

### Percentage Wash-off

In order to determine the percentage wash-off, laminates were prepared in the same manner as discussed above, with the exception of Substrate 1 being biaxially oriented polypropylene (Taghleef LSA, 25 µm) as a possibility in addition to the previously stated Substrate 1, and Substrate 2 may be a glass substrate purchased from Chem Instruments in addition to PET and Kraft Paper (Uline, S3574). Once the laminates are made, they are given 24 hour to equilibrate and placed in a one-liter beaker that is filled to 800 mL with a 2.5% sodium hydroxide (NaOH) solution and heated to 80°C with 350 RPM of stirring using a magnetic stir bar coated in Teflon. The laminates are left in the caustic wash solution for 5 minutes, removed from the beaker, dried gently with a towel and evaluated for wash-off by a 0-5 scale or separation of the two substrates. The scale ranging in 20% for each number, e.g., 0 is 0% wash-off of the strip, 1 is 20%, advancing to 5 being 100% wash-off.

### Adhesive Failure

In order to determine the mode of failure, a visual study of the laminates subjected to the one of the above wash-off conditions was performed after drying the laminates and after evaluating the wash-off. Laminates with adhesive solely maintaining bonding to Substrate 1 are considered adhesive failure. Cohesive failure was determined if the adhesive transferred to Substrate 2 during wash-off conditions and a combination of adhesive and cohesive failure is possible for the laminates.

While this invention has been described in detail with reference to certain preferred embodiments, it should be appreciated that the present disclosure is not limited to those precise embodiments. Rather, in view of the present disclosure, many modifications and variations would present themselves to those skilled in the art without departing from the scope and spirit of this invention.

## Claims

1. A label construct comprising a facestock and a polyether-based adhesive disposed on the facestock wherein the adhesive comprises at least about 5 wt%, preferably at least about 10 wt%, more preferably at least about 20 wt% further preferably at least about 30 wt% of at least one polyether.

2. The label construct of claim 1 wherein the at least one polyether comprises a plurality of polyethers, preferably the plurality of polyethers comprises at least about 30 wt% of the polyether-based adhesive.

3. The label construct of claim 1 or claim 2 wherein the polyether comprises a polymer obtained from polymerization or copolymerization of one or more monomers selected from the group of ethylene oxide, propylene oxide, butyl oxide, tetrahydrofuran, 2-methyltetrahydrofuran, 3-methyltetrahydrofuran, 2,2-dimethyltetrahydrofuran, 2,3-dimethyltetrahydrofuran, 3,3-dimethyltetrahydrofuran, oxetane and its derivatives, epoxidized fatty acid, epoxidized fatty acid ester, epoxidized plant oil, glycidyl ether, and combinations thereof.

4. The label construct of any one of claims 1 to 3 wherein the at least about 5 wt% of the at least one polyether comprises at least 2 crosslinked polyether molecules or wherein the plurality of polyethers comprises at least 2 crosslinked polyether molecules, preferably, the polyether-based adhesive exhibits a cohesion strength sufficient for pressure sensitive adhesives applications, further preferably at least about 30 hours, more preferably at least about 60 hours, and even more preferably at least about 150 hours per ASTM standard ASTM D3654, "Standard Test Methods for Shear Adhesion of Pressure-Sensitive Tapes", with the test substrate being a standard steel, the test specimen size being 1 inch by 1 inch, and the constant stress being 1000 grams.

5. The label construct of any of claims 1 to 3 wherein the at least about 5 wt% of the at least one polyether or the plurality of polyethers comprises at least one polyether or the plurality of polyethers crosslinked with a curing agent, preferably the polyether-based adhesive exhibits a cohesion strength sufficient for a pressure sensitive adhesive application, or wherein the polyether-based adhesive comprises a plurality of polyether blocks.

6. The label construct of any one claims 1 to 5 wherein the facestock comprises at least one layer of a film or a foam wherein the layer comprises a material selected from the group of paper, metal, polymers or combinations thereof, preferably the polymer comprises at least one selected from the group of polyethylene, polypropylene, other polyolefins, polyester, polyamide, polystyrene, poly(vinyl chloride), poly(vinyl acetate), poly(ethylene-co-vinyl acetate), polyacrylate, polymethacrylate, polycarbonate, poly(lactic acid), cellulose-based polymer, acetal resin and combinations thereof, more preferably the polyester comprises polyethylene terephthalate) (PET), more preferably the cellulose-based polymer comprises cellophane, more preferably the polyamide comprises a condensation product of adipic acid and hexamethylenediamine.

7. The label construct of claim 6 wherein the facestock comprises a second layer comprising the film or the foam, the layer and the second layer may be the same or different.

8. The label construct of either one of claims 6 or 7 wherein the facestock comprises a laminate.

9. The label construct of any one of claims 1 to 8 wherein a printing layer disposed in contact with a surface of the facestock.

10. An article comprising a substrate and the label construct of any one of claims 1 to 9 adhered to a surface of the substrate, preferably, the substrate comprises one of a rigid packaging material or a flexible plastic packaging material, further preferably the rigid packaging material or the flexible packaging material comprises at least one selected from glass, metal, polyethylene terephthalate) (PET), high-density polyethylene (HDPE) and combinations thereof, or preferably the substrate comprises a packaging material.

11. A method of removing the label construct in accordance with any one of claims 1-9 from a substrate comprising exposing the substrate having the label construct adhered to the substrate to an aqueous liquid, the aqueous liquid having a temperature of at least 50°C, preferably more than about 65°C, more preferably at least about 70°C, even more preferably more than about 80°C, optionally agitating the aqueous liquid during the exposing , preferably an agitation speed set to achieve an impeller tip speed of at least about 60 meters per minute, more preferably at least about 180 meters per minute, further preferably at least about 240 meters per minute.

12. The method of claim 11, wherein the aqueous liquid contains a caustic substance, preferably sodium hydroxide, a concentration of the caustic substance preferably comprises less than about 5.0 % by weight, more preferably less than about 3.0 % by weight, even more preferably less than about 1.5%,most preferably equal to or less than about 1 wt%.

13. The method of either one of claims 11 or 12 wherein the aqueous liquid contains a surfactant, preferably the surfactant comprises at least one from a cationic surfactant, anionic surfactant, non-ionic surfactant, amphoteric surfactant, and combinations thereof, preferably a concentration of the surfactant comprises less than about 5.0% by weight, more preferably less than about 1.0 % by weight, and even more preferably less than about 0.5 % by weight.

14. The method of any one of claims 11 to 13 wherein a time of the exposing the substrate to the agitated aqueous liquid comprises a range from about 1 minute to about 180 minutes, more preferably the range from about 5 minutes to about 60 minutes, and even more preferably the range from about 10 minutes to about 30 minutes, or wherein in the time of the exposing to the agitated aqueous liquid comprises at least one of: at least about 1 minute, at least about 5 minutes, at least about 10 minutes, up to about 180 minutes, up to about 60 minutes and up to about 30 minutes and combinations thereof.

15. A label construct of any of claims 1-9 wherein the label passes association of plastic recyclers critical guidance criteria for wash-off labels comprising at least one of HDPE CG-01 Critical Guidance Criteria for HDPE containers or PET-CG-02 Critical Guidance Criteria for PET containers.
